# EUROPEAN PATENT APPLICATION

(11) **EP 4 535 198 A1**
(43) Date of publication of application: **09.04.2025**
(21) Application number: 23810697.5
(22) Date of filing: 18.04.2023
(51) Int. Cl.: G06F 16/9535, G06F 16/957

(54) **MEDIA CONTENT PLAYING METHOD AND APPARATUS, AND DEVICE, STORAGE MEDIUM AND PRODUCT**

(30) Priority: 24.05.2022 CN 202210573487
(71) Applicant: Beijing Zitiao Network Technology Co., Ltd., Beijing 100190 (CN)
(72) Inventor: WANG, Xiaolu, Beijing 100028 (CN); YANG, Yuhao, Beijing 100028 (CN); BI, Yufei, Beijing 100028 (CN)
(74) Representative: Dentons UK and Middle East LLP
(86) International application number: PCT/CN2023/088818
(87) International publication number: WO 2023/226623

(57) **Abstract**

The embodiments of the disclosure provide a method and an apparatus of playing a media content, a device, a storage medium and a product, the method includes: playing a first media content in a first playing page, and displaying a first associated information corresponding to a second media content associated with the first media content, wherein the first media content and the second media content are media contents of different types; and in response to a triggering operation of a user on the first associated information, playing the second media content associated with the first media content in a second playing page.

## Description

### CROSS-REFERENCE TO RELATED APPLICATION

This application claims priority of Chinese Patent Application No. 2022105734877 submitted to the China Patent Office on May 24, 2022, and entitled "METHOD AND APPARATUS OF PLAYING MEDIA CONTENT, DEVICE, STORAGE MEDIUM AND PRODUCT", which is incorporated herein by reference in its entirety.

### FIELD

Embodiments of the present disclosure relate to the field of interface interaction, and in particular to a method and an apparatus of playing a media content, a device, a storage medium and a product.

### BACKGROUND

With the improvement of hardware performance of terminal devices and the continuous progress of artificial intelligence technology, there are more and more applications (referred to as APP) running on the terminal devices. In order to facilitate the use of application software by a user, some application software provides a personalized recommendation mode to recommend contents that the user is interested in. For example, when the user uses music software and adopt the personalized recommendation mode, it often needs the user to play multiple songs for previewing to find their favorite songs.

### SUMMARY

The embodiments of the present disclosure provide a method and an apparatus of playing a media content, a device, a storage medium and a product.

In a first aspect, the embodiments of the present disclosure provide a method of playing a media content, comprising:
playing a first media content in a first playing page, and displaying a first associated information corresponding to a second media content associated with the first media content, wherein the first media content and the second media content are media contents of different types; and
in response to a triggering operation of a user on the first associated information, playing the second media content associated with the first media content in a second playing page.

In a second aspect, the embodiments of the present disclosure provide an apparatus of playing a media content, comprising:
a displaying module configured to play a first media content in a first playing page, and display a first associated information corresponding to a second media content associated with the first media content, wherein the first media content and the second media content are media contents of different types; and
a playing module configured to, in response to a triggering operation of a user on the first associated information, play the second media content associated with the first media content in a second playing page.

In a third aspect, the embodiments of the present disclosure provide an electronic device, comprising: at least one processor and a memory;
the memory stores computer execution instructions;
the at least one processor executes the computer execution instructions stored by the memory, so that the at least one processor executes the method of playing the media content described in the first aspect and various possible designs of the first aspect.

In a fourth aspect, the embodiments of the present disclosure provide computer-readable storage medium having computer execution instructions stored thereon, the computer execution instructions, when executed by the processor, carry out the method of playing the media content described in the first aspect and various possible designs of the first aspect.

In a fifth aspect, the embodiments of the present disclosure provide a computer program product, comprising computer execution instructions, which, when executed by a processor, carry out the method of playing the media content described in the first aspect and various possible designs of the first aspect.

In a sixth aspect, the present disclosure provides a computer program, which, when executed by a processor, carries out the method of playing the media content described in the first aspect and various possible designs of the first aspect.

The method and apparatus of playing the media content, the device, the storage medium and the product provided by the embodiments can skip to the second playing page to the second media content according to the triggering operation of the user on the first associated information, by playing a first media content in a first playing page and displaying a first associated information corresponding to a second media content associated with the first media content.

### BRIEF DESCRIPTION OF THE DRAWINGS

In order to more clearly describe the embodiments of the present disclosure or the technical solution in the prior art, the following will briefly introduce the drawings needed in the description of the embodiments or the prior art. It is obvious that the drawings in the following description are some embodiments of the present disclosure. For ordinary technicians in the art, they can also obtain other drawings from these drawings without making creative labor.
FIG. 1 is a schematic flow diagram of a method of playing a media content provided by an embodiment of the present disclosure;
FIG. 2 is the schematic diagram of interface interaction provided by an embodiment of the present disclosure;
FIG. 3 is another schematic diagram of interface interaction provided by an embodiment of the present disclosure;
FIG. 4 is another schematic diagram of interface interaction provided by an embodiment of the present disclosure;
FIG. 5 is a schematic diagram of a displaying interface provided by an embodiment of the present disclosure;
FIG. 6 is another schematic diagram of interface interaction provided by an embodiment of the present disclosure;
FIG. 7 is a schematic structural diagram of an apparatus of playing a media content provided by an embodiment of the present disclosure;
FIG. 8 is a schematic structural diagram of an electronic device provided by an embodiment of the present disclosure.

### DETAILED DESCRIPTION

In order to make the purpose, technical solutions and advantages of the embodiments of the present disclosure clearer, the technical solutions in the embodiments of the present disclosure will be described clearly and completely below in combination with the drawings in the embodiments of the present disclosure. Obviously, the described embodiments are a part of the embodiments of the present disclosure, not all of the embodiments. Based on the embodiments in the disclosure, all other embodiments obtained by the ordinary technicians in the art without making creative labor fall within the protection scope of the disclosure.

In view of the above mentioned technical problem that the recommendation form of the existing media content recommendation method is relatively simple, the present disclosure provides a method and an apparatus of playing a media content, a device, a storage medium and a product.

It should be noted that the method and the apparatus of playing the media content, the device, the storage medium and the product provided in the disclosure can be used in various scenarios of media content recommendation.

At present, various kinds of application software provide the user with a media content recommendation function, through which a content that the user is interested in can be recommended to the user, so that the user can find more media contents meeting personalized needs based on the recommendation function and find more new things. For example, music software can push a music media content to the user, and short video software can push a video media content to the user. Taking a music application as an example, when the user uses the music software, if the user adopts a personalized recommendation mode, the user often needs to play multiple songs for previewing to find their favorite songs. However, when using the above method for song recommendation, the efficiency of finding and promoting music that the user like is not high. For example, if the recommended song has a long prelude or is not catchy, it may cause the user to skip a good song directly. Moreover, the existing media content recommendation method often has a relatively single form of recommendation, resulting in poor user experience of recommended content.

In the process of solving the above technical problem, the inventor founds through research that in order to improve user preferences for recommended content and enrich the recommendation forms of recommended media content, a mixed arrangement of music media content and video media content can be used to push media content to the user. In addition, if music media content has associated video media content, or if video media content has associated music media content, when playing the music media content or video media content, associated information corresponding to the video media content or music media content can be displayed on a displaying interface, so that the user can realize a switching operation of different types of media contents according to the associated information.

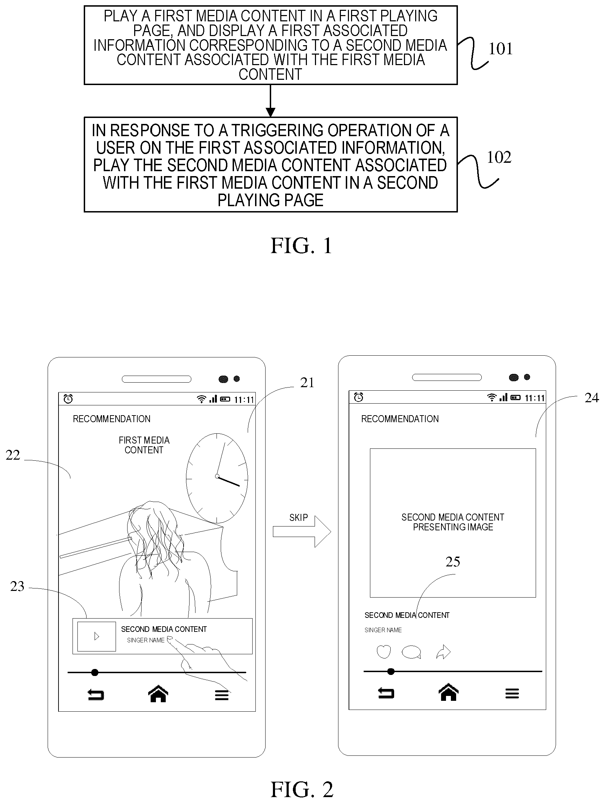

FIG. 1 is a schematic flow diagram of a method of playing a media content provided by an embodiment of the present disclosure. As shown in FIG. 1, the method includes:
Step 101: playing a first media content in a first playing page, and displaying a first associated information corresponding to a second media content associated with the first media content, wherein the first media content and the second media content are media contents of different type.

An executive body of the embodiments is an apparatus of playing a media content. The apparatus of playing the media content can be coupled into a terminal device, so that displaying of the media content can be performed according to a triggering operation of the user on the terminal device.

Optionally, the apparatus of playing the media content may also be coupled into a server, which can communicate with the terminal device, so that the terminal device can be controlled to display and play the media content according to the triggering operation of the user on the terminal device.

In this embodiment, in order to realize recommendation of the media content, the first media content can be played in the first playing page. The first media content may have a second media content that is of different type from the first media content. Optionally, the first media content can be a music media content or a video media content.

When the first media content is the music media content, the second media content associated with the first media content can be the video media content. The first media content can be specifically songs sung in the second media content, or background music of the second media content. The first media content may at least include a chorus part of the second media content, or a part with high popularity.

Alternatively, when the first media content is the video media content, the second media content associated with the first media content may be the music media content.

As an implementation, the media content may also be a broadcast media content, an image media content, a text media content, etc., which will not be limited by the disclosure.

Further, in order to improve the diversity of the recommended media content, the first playing page may also be provided with the first associated information corresponding to the second media content. The user can play and view the second media content by triggering the first associated information.

Step 102: in response to a triggering operation of a user on the first associated information, playing the second media content associated with the first media content in a second playing page.

In this embodiment, after the first associated information is displayed in the first playing page, the user can perform the triggering operation on the first associated information according to actual needs. The triggering operation includes but is not limited to click, double click, long press, drag and so on, which are not limited in the disclosure.

In response to the triggering operation of the user on the first associated information, it can skip into the second playing page. In the second playing page, the second media content associated with the first media content can be played.

For example, when the first media content is the video media content, in response to the triggering operation of the user on the first associated information, the music media content associated with the video media content can be played in the second playing page. By displaying the associated music media content in the form of video, the user can understand the music media content more intuitively.

Still for example, when the first media content is the music media content, in response to the triggering operation of the user on the first associated information, the video media content associated with the music media content can be played in the second playing page.

By establishing an association relationship between the first media content and the second media content, it may enrich the types of the recommended media content, improve the diversity of playing of the media content, and improve the user experience. It can avoid the technical problem that the user cannot find more media contents that meet the personalized needs due to simply recommending a certain type of media content.

FIG. 2 is the schematic diagram of interface interaction provided by an embodiment of the present disclosure. As shown in FIG. 2, the first media content 22 can be played on the first playing page 21, wherein the first media content 22 can specifically be the video media content. The first playing page 21 is also provided with the first associated information 23 corresponding to the second media content. In response to the triggering operation of the user on the first associated information 23, it may skip to the second playing page 24, and play the second media content 25 in the second playing page 24, wherein the second media content 25 can specifically be the music media content.

The method of playing the media content provided by the embodiments can skip to the second playing page to the second media content according to the triggering operation of the user on the first associated information, by playing a first media content in a first playing page and displaying a first associated information corresponding to a second media content associated with the first media content. It enriches the types of the recommended media content, improves the user experience, and enables the user to more quickly and accurately explore the media content meeting the personalized needs. In addition, by setting the first associated information, the user can easily realize switching of the media content, simplifying the interface operation process, and further improving the user experience.

Further, on the basis of any of the above embodiments, after step 102, it further includes:
displaying a second associated information corresponding to the first media content in the second playing page;
in response to a triggering operation of the user on the second associated information, returning to the first playing page, and playing the first media content.

In this embodiment, after skipping to the second playing page through the triggering operation of the first associated information and playing the second media content, in order to facilitate the user to view the first media content, the second playing page may also be provided with the second associated information corresponding to the first media content.

The user can perform the triggering operation on the second associated information according to actual needs. In response to the triggering operation, it may return to the first playing page and play the first media content in the first playing page. The first media content can continue to be played according to a historical playing progress of the first media content, or the first media content can be played from the initial position again, which is not limited by the disclosure.

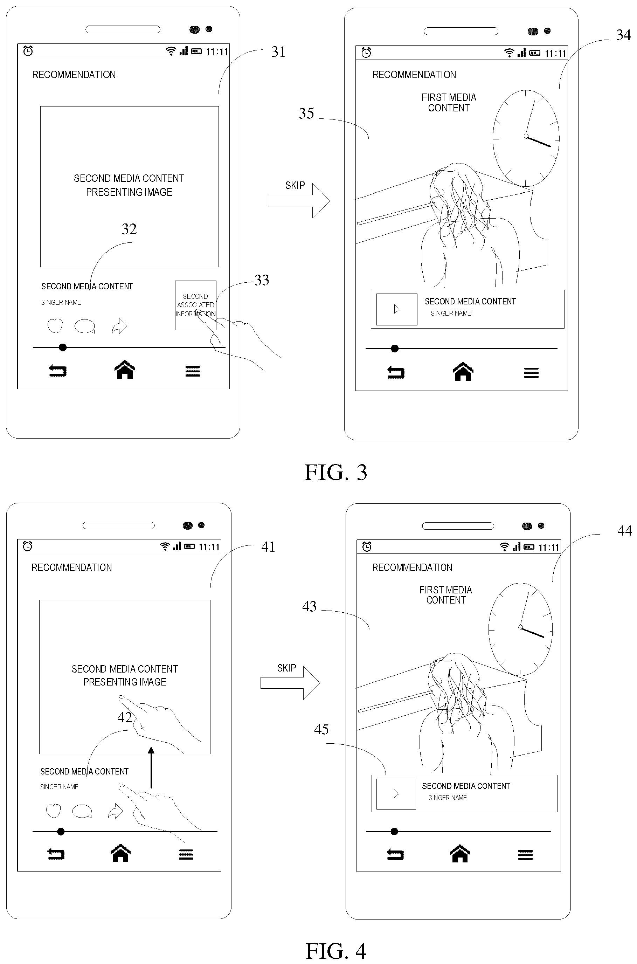

FIG. 3 is another schematic diagram of interface interaction provided by an embodiment of the present disclosure. As shown in FIG. 3, the second media content 32 can be played in the second playing page 31, wherein the second media content 32 can specifically be the music media content. The second playing page 31 can also display the second associated information 33 corresponding to the first media content. In response to the triggering operation of the user on the second associated information 33, it may return to the first playing page 34, and play the first media content 35 in the first playing page 34, wherein the first media content 35 can specifically be the video media content.

The method of playing the media content provided by this embodiment realizes the switching operation between the first media content and the second media content by setting the second associated information corresponding to the first media content in the second playing page, and the user can quickly select and play the media content of interest according to the personalized needs. On the basis of improving the diversity of playing the media content, it meets the personalized needs of the user. In addition, triggering the second associated information and the first associated information can realize the switching operation between the first playing page and the second playing page. The operation is simple and improves the interaction experience of the user.

Further, on the basis of any of the above embodiments, step 102 includes:
displaying and playing the second media content in a media content stream in the second playing page;
in response to a switching operation of the user on the second media content, switching to a next media content in the media content stream; and
if the next media content is the first media content that is of different type from the second media content, skipping to the first playing page to play the first media content, and displaying the first associated information corresponding to the second media content associated with the first media content.

In this embodiment, in the process of recommending the media content for the user, a mixed arrangement of the first media content and the second media content can be selected to recommend and play the media content. Specifically, a media content stream can be configured in advance, and the media content stream includes a plurality of first media contents and a plurality of second media contents of different type from the second media content. The plurality of first media contents and the plurality of second media contents are arranged in the media content stream in a mixed arrangement way, thus providing the user with diversified viewing experience.

Further, the second media content in the media content stream can be displayed and played in the second playing page. The user can perform the switching operation on the second media content according to actual needs, wherein, the switching operation can be sliding in a predetermined direction, long press, etc., which is not limited by the disclosure.

According to the switching operation of the user, it may switch to the next media content in the media content stream. Since the media content in the media content stream is arranged in a mixed arrangement way, if the next media content is the second media content that is of different type from the second media content currently being played, it can skip to the first playing page to play the first media content, and display the first associated information corresponding to the second media content associated with the first media content.

Optionally, when the second media content is the music media content, because some music media contents have associated video media contents, while some music media contents do not have associated video media contents, therefore, in the switch process of the media content, if the switched first media content is still the second media content, then if the second media content has an associated second media content, the second associated information corresponding to the first media content associated with the second media content can be displayed in the second playing page. So that the user can quickly realize switching operation for different types of media contents.

FIG. 4 is another schematic diagram of interface interaction provided by an embodiment of the present disclosure. As shown in FIG. 4, the second media content 42 in the media content stream is displayed and played in the second playing page 41, wherein the second media content 42 can specifically be the music media content. In response to the switching operation of the user on the second media content 42, the next media content in the media content stream can be played. When the next media content is the first media content that is of different type from the second media content, it can skip to the first playback page 43 to play the first media content 44, wherein the first media content 44 can specifically be the video media content. In addition, the first associated information 45 corresponding to the second media content associated with the first media content can be displayed in the first playing page 43.

The method of playing the media content provided in this embodiment can provide the user with more diversified media content viewing experiences because the media contents in the media content stream are arranged in a mixed arrangement way. In response to the switching operation of the user, if the next media content is the second media content of a different type from the second media content currently being played, the first associated information corresponding to the second media content associated with the first media content can be displayed, so that based on the first associated information, switching display of different types of the media contents can be conveniently realized, so that the displayed media content is more suitable for the personalized needs of the user, improving the user experience.

Further, on the basis of any of the above embodiments, the media content stream comprises a first content stream and a second content stream, the first content stream comprises a plurality of first media contents, and the second content stream comprises a plurality of second media contents;
after if the next media content is the first media content that is of different type from the second media content, skipping to the first playing page to play the first media content, and displaying the first associated information corresponding to the second media content associated with the first media content, the method further comprises:
playing the plurality of first media contents in the first content stream in sequence.

In this embodiment, the media content stream can specifically include a first content stream and a second content stream, the first content stream includes a plurality of first media contents, and the second content stream includes a plurality of second media contents.

Further, when the next media content is the first media content in response to the switching operation of the user, the plurality of first media contents in the first content stream can be played in in sequence.

Or, when the next media content is the second media content in response to the switching operation of the user, the plurality of second media contents in the second content stream can be played in in sequence.

Optionally, if the user wants to view other types of media content in the process of viewing the first content stream or the second content stream, it may exit the current playing page and view the mixed media content stream again.

Optionally, if a predetermined type switching icon can be displayed on the displaying interface during the user views the first content stream or the second content stream, it may achieve viewing of other types of media contents by a triggering operation the type switching icon.

By setting the first content stream and the second content stream, the user can view a plurality of media contents of the same type, so that the playing of the media content is more suitable for the needs of the user.

Further, on the basis of any of the above embodiments, the first associated information further includes an interaction icon corresponding to the second media content,

After step 102, it further includes:
in response to the triggering operation of the user on the interaction icon, updating interaction information corresponding to the second media content, wherein the interaction icon comprises at least one of a favoriting icon, a commenting icon, a like icon and a sharing icon.

In this embodiment, the first associated information further includes an interaction icon corresponding to the second media content, wherein the interaction icon includes at least one of the favoriting icon, the commenting icon, the like icon, and the sharing icon.

After displaying the interaction icon in the first associated information, the user can realize the interaction operation based on the second media content by the triggering operation on the interaction icon.

For example, if the user wants to share the second media content to friends, the user can trigger the sharing icon, select the corresponding friends, and share the second media content to the friends.

Or, if the user wants to post some comment information on the second media content, the user can perform triggering operation on the commenting icon. In response to the triggering operation, a comment interface is displayed. Obtaining the comment information entered by the user in the comment interface, and updating the comment information into a comment list corresponding to the second media content.

Further, after displaying the first associated information, the interaction information corresponding to the second media content can be updated in response to the triggering operation of the user on the interaction icon in the first associated information. For example, it may update the like number and favoriting number of the second media content. The comment information of the second media content can be updated.

By displaying the interaction icon, it may achieve the interaction operation of the user and the second media content or other users browsing the second media content, enriching the corresponding interaction manners of the media content. In addition, the interaction operation is more convenient and can optimize the interaction experience of the user.

Further, on the basis of any of the above embodiments, the interaction icon includes a favoriting icon,

After the step 102, it further includes:
in response to the triggering operation of the user on the favoriting icon, adding the second media content to a favoriting list.

In this embodiment, the interaction icon can specifically be a favoriting icon. The user can achieve the favoriting of the second media content by the triggering operation on the favoriting icon. Specifically, in response to the triggering operation of the user on the favoriting icon, the second media content is added to the favoriting list, wherein the favoriting list includes the media content that the user has favorited, and the media content can be either the first media content or the second media content.

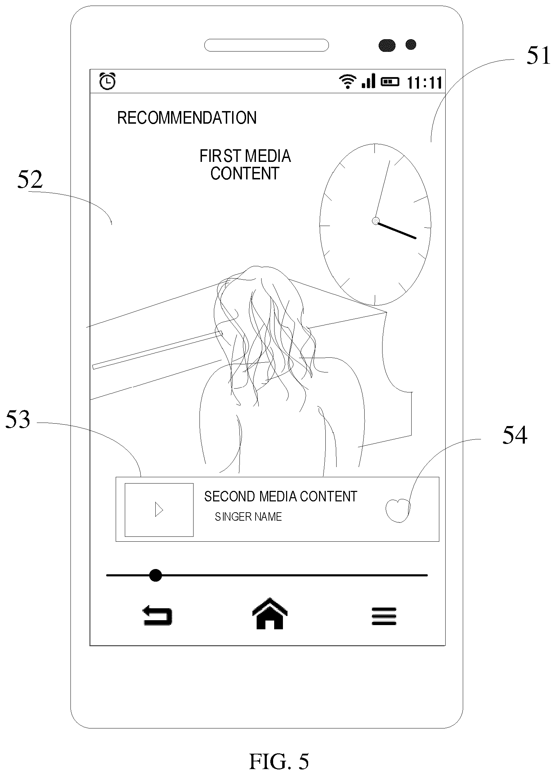

FIG. 5 is a schematic diagram of a displaying interface provided by an embodiment of the present disclosure. As shown in FIG. 5, the first media content 52 can be played on the first playing page 51, wherein the first media content 52 can specifically be the video media content. The first playing page 51 is further provided with the first associated information 53 corresponding to the second media content, wherein the first associated information 53 further includes the favoriting icon 54. The user can perform the favoriting operation of the second media content by the triggering operation on the favoriting icon 54.

By displaying the favoriting icon, the user can favorite the media content of interest by triggering the favoriting icon for subsequent viewing. By displaying the favoriting icon on the first associated information, the user can achieve the favoriting operation of the second media content when browsing the first media content, effectively simplifying the operation process of favoriting the second media content and improving the user experience.

Further, on the basis of any of the above embodiments, the first playing page or the second playing page further includes a predetermined favoriting list icon;
the method further comprises:
in response to a triggering operation of the user on the favoriting list icon, displaying the favoriting list; and
based on a selection operation of the user on a media content saved in the favoriting list, playing the media content selected by the user.

In this embodiment, the first playing page or the second playing page further includes a predetermined favoriting list icon. During the user browses the first media content or the second media content, the user can view the favorited media content according to the personalized needs.

Optionally, the favoriting list can be displayed in response to the triggering operation of the user on the favoriting list icon, wherein the favoriting list includes the media content that the user has favorited, and the media content can be either the first media content or the second media content. Determining the target media content selected by the user and playing the target media content selected by the user according to the selection of the user on the favorited media content in the favoriting list.

Alternatively, the favoriting list can be displayed in response to the triggering operation of the user on the favoriting list icon, and a plurality of media contents in the favoriting list can be played in in sequence according to the favoriting order.

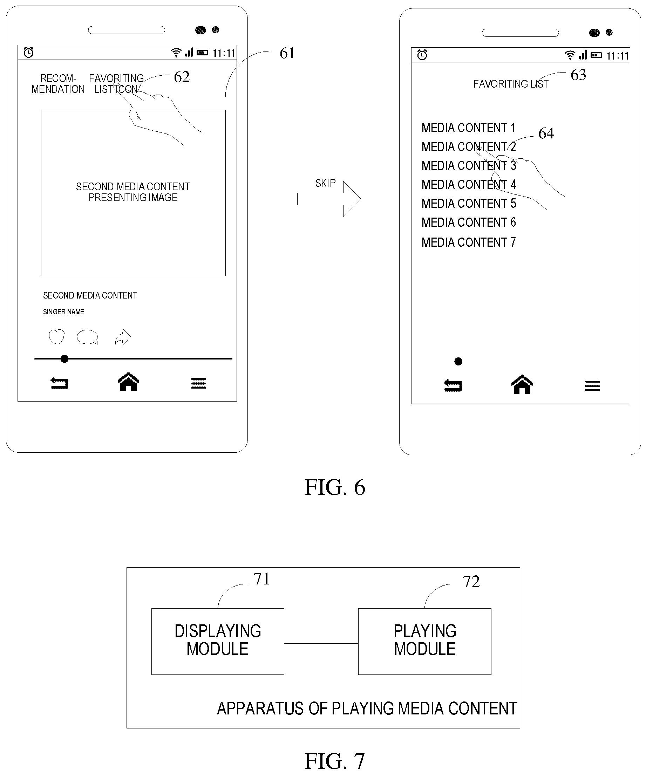

FIG. 6 is another schematic diagram of interface interaction provided by an embodiment of the present disclosure. Taking the second playing page as an example, as shown in FIG. 6, the second playing page 61 can display a predetermined favoriting list icon 62. In response to the triggering operation of the user on the favoriting list icon 62, the favoriting list 63 can be displayed, wherein the favoriting list 63 includes a plurality of media contents 64 that have been favorited by the user.

By setting the favoriting list icon in the first playing page or the second playing page, the user can easily view the favoriting list and review the favorited media content.

Further, on the basis of any of the above embodiments, step 102 includes:
in response to the triggering operation of the user on the first associated information, displaying a version list corresponding to the second media content in the first playing page;
based on a selection operation of the user in the version list, determining a target version selected by the user; and
playing the second media content of the target version in the second playing page.

In this embodiment, since the media content typically has multiple different versions, in order to further improve the viewing experience of the user, it may obtain the target version selected by the user, and play the second media content of the target version selected by the user.

Specifically, the version list corresponding to the second media content can be displayed in the first playing page in response to the triggering operation of the user on the first associated information. In response to the selection operation of the user in the version list, the target version selected by the user is determined.

Taking the second media content being the music media content as an example, in response to the triggering operation of the user on the first associated information in the first playing interface, the version list corresponding to the second media content can be displayed in the first playing page, where the version list includes multiple different versions corresponding to the second media content, for example, it can include MV version, concert version, cover version, etc. According to the selection operation of the user in the version list, the second media content of the target version, MV version, selected by the user can be played.

The version list corresponding to the second media content is displayed in the first playing page in response to the triggering operation of the user on the first associated information, so that the played second media content can be more suitable for the actual needs of the user and further improve the user experience.

Further, on the basis of any of the above embodiments, step 102 includes:
playing the second media content from an initial position of the second media content associated with the first media content.

In this embodiment, when switching from the first media content to the second media content associated with the first media content, the second media content can be played from the initial position of the second media content, so that the user may understand the complete second media content.

Further, on the basis of any of the above embodiments, step 102 includes:
determining a playing progress of the first media content; and
determining a target timestamp at which the second media content matches with the playing progress, and playing the second media content from the target timestamp.

In this embodiment, in order to give the user a smoother viewing experience, the second media content can continue to be played based on the playing progress of the first media content. Specifically, the playing progress of the first media content can be determined. Determine the target timestamp that matches the second media content with the playing progress, and play the second media content from the target timestamp.

For example, the first media content may include a chorus part in the second media content. When the user triggers the first associated information to skip to the second playing page, the first media content plays to the tenth second of the chorus part. Then the specific target timestamp of the tenth second of the chorus part in the second media content can be further determined, for example, it can be 2 minutes and 34 seconds. Therefore, the second media content can be played from 2 minutes and 34 seconds.

By continuing to broadcast the second media content according to the playing progress of the first media content, the media content is relatively smooth from the perspective of the user, and it may achieve continuing to play the part of the second media content that is more attractive to the user, so that the user can quickly and accurately determine the highlight part of the second media content.

Further, on the basis of any of the above embodiments, step 102 includes:
determining a target segment of the second media content that meets a predetermined playing condition; and
playing the target segment corresponding to the second media content.

In this embodiment, since the existing song recommendation method is generally to play a song from scratch, if the beginning of the song is not brilliant enough, the user may miss a good song. Therefore, in order to enable the user to more quickly and accurately determine the highlight part in the second media content, it is possible to determine the target segment in the second media content that meets the predetermined playing condition. The target segment meeting the predetermined playing condition includes but is not limited to the chorus part, the part with higher play times, the part with more comments, etc. After determining the target segment, it may play the target segment directly to improve the success rate of media content recommendation.

In practical applications, the user can choose from the above three methods according to their actual needs.

The method of playing the media content provided in the embodiments can optimize the viewing experience of the user of the second media content by setting a variety of different play methods of the second media content.

FIG. 7 is a schematic structural diagram of an apparatus of playing a media content provided by an embodiment of the present disclosure. As shown in FIG. 7, the apparatus includes: a displaying module 71 and a playing module 72. Specifically, the displaying module 71 is configured to play a first media content in a first playing page, and display a first associated information corresponding to a second media content associated with the first media content, wherein the first media content and the second media content are media contents of different types; the playing module 72 is configured to, in response to a triggering operation of a user on the first associated information, play the second media content associated with the first media content in a second playing page.

Further, on the basis of any of the above embodiments, the apparatus further includes: a displaying module, which is further configured to display a second associated information corresponding to the first media content in the second playing page; a playing module, which is further configured to, in response to a triggering operation of the user on the second associated information, return to the first playing page, and play the first media content.

Further, on the basis of any of the above embodiments, the displaying module is configured to display and play the second media content in a media content stream in the second playing page; in response to a switching operation of the user on the second media content, switch to a next media content in the media content stream; and if the next media content is the first media content that is of different type from the second media content, skip to the first playing page to play the first media content, and display the first associated information corresponding to the second media content associated with the first media content.

Further, on the basis of any of the above embodiments, the media content stream comprises a first content stream and a second content stream, the first content stream comprises a plurality of first media contents, and the second content stream comprises a plurality of second media contents; the displaying module is further configured to play the plurality of first media contents in the first content stream in sequence.

Further, on the basis of any of the above embodiments, the first associated information further comprises an interaction icon corresponding to the second media content; the apparatus further comprises: an updating module configured to, in response to the triggering operation of the user on the interaction icon, update interaction information corresponding to the second media content; wherein the interaction icon comprises at least one of a favoriting icon, a commenting icon, a like icon and a sharing icon.

Further, on the basis of any of the above embodiments, the interaction icon comprises a favoriting icon; the apparatus further includes an adding module configured to, in response to the triggering operation of the user on the favoriting icon, add the second media content to a favoriting list.

Further, on the basis of any of the above embodiments, the first playing page or the second playing page further comprises a predetermined favoriting list icon; the apparatus further includes: a displaying module, which is further configured to, in response to a triggering operation of the user on the favoriting list icon, display the favoriting list; a playing module, which is further configured to, based on a selection operation of the user on a media content saved in the favoriting list, play the media content selected by the user.

Further, on the basis of any of the above embodiments, the playing module is configured to, in response to the triggering operation of the user on the first associated information, display a version list corresponding to the second media content in the first playing page; based on a selection operation of the user in the version list, determine a target version selected by the user; and play the second media content of the target version in the second playing page.

Further, on the basis of any of the above embodiments, the playing module is configured to play the second media content from an initial position of the second media content associated with the first media content.

Further, on the basis of any of the above embodiments, the playing module is configured to: determine a playing progress of the first media content; and determine a target timestamp at which the second media content matches with the playing progress, and playing the second media content from the target timestamp .

Further, on the basis of any of the above embodiments, the playing module is configured to: determine a target segment of the second media content that meets a predetermined playing condition; and play the target segment corresponding to the second media content .

The device provided in the embodiments can be configured to implement the technical solution of the embodiments of the above method. Its implementation principle and technical effect are similar, and the embodiments will not be repeated here.

Another embodiment of the present disclosure further provides an electronic device, comprising: at least one processor and a memory;
the memory stores computer execution instructions;
the at least one processor executes the computer execution instructions stored by the memory, so that the at least one processor executes the method as described in any of the above embodiments.

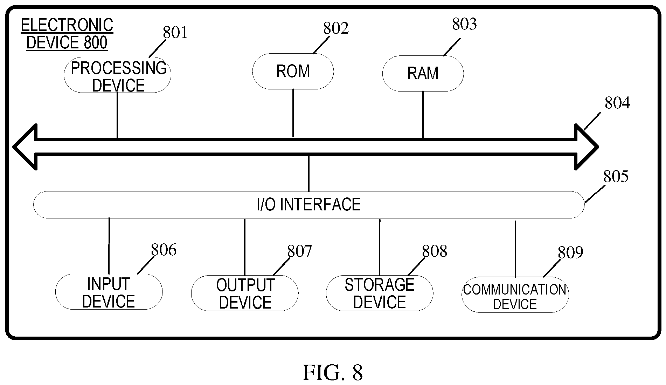

FIG. 8 is a schematic structural diagram of an electronic device provided by an embodiment of the present disclosure. As shown in FIG. 8, the electronic device 800 can be a terminal device or a server. The terminal device can include but are not limited to mobile terminals such as mobile phones, laptops, digital radio receivers, personal digital assistants (PDA), portable Android devices (PAD), portable media player (PMP), vehicle terminals (such as vehicle navigation terminals), and fixed terminals such as digital TV, desktop computers, etc. The electronic device shown in FIG. 8 is only an example and should not impose any restrictions on the function and scope of use of the embodiments of the present disclosure.

As shown in FIG. 8, the electronic device 800 can include a processing device (such as a central processor, a graphics processor, etc.) 801, which can perform various appropriate actions and processes according to a program stored in the Read Only Memory (ROM) 802 or a program loaded into the Random Access Memory (RAM) 803 from the storage device 808. The processing device 801, ROM 802, and RAM 803 are connected to each other through bus 804. RAM 803 also stores various programs and data required for the operation of electronic device 800. An input/output (I/O) interface 805 is also connected to bus 804.

Generally, the following devices can be connected to the I/O interface 805: an input device 806 including, for example, a touch screen, a touch pad, a keyboard, a mouse, a camera, a microphone, an accelerometer, gyroscope, and the like; an output device 807 including, for example, a Liquid Crystal Display (LCD), a loudspeaker, a vibrator, and the like; a storage device 808 including, for example, a tape, a hard disk, and the like; and a communication device 809. The communication device 809 may allow wireless or wired communication of the electronic device 800 with other devices to exchange data. Although FIG. 8 shows an electronic device 800 with various devices, it should be understood that it is not required to implement or have all the devices shown. Alternatively, more or fewer devices may be implemented or provided.

In particular, according to the embodiments of the present disclosure, the process described above with reference to the flowchart can be implemented as a computer software program. For example, the embodiments of the present disclosure includes a computer program product, which includes a computer program carried on a computer-readable medium, and the computer program includes program code for executing the method shown in the flowchart. In such embodiments, the computer program can be downloaded and installed from the network through the communication device 809, or installed from the storage device 808, or installed from the ROM 802. When the computer program is executed by the processing device 801, the above functions defined in the method of the embodiments of the present disclosure are executed.

It should be noted that the computer-readable medium described in the present disclosure can be a computer-readable signal medium, a computer-readable storage medium, or any combination of the two. The computer-readable storage medium may be, for example, but is not limited to, an electrical, magnetic, optical, electromagnetic, infrared, or semiconductor system, apparatus, or device, or any combination of the above. More specific examples of computer-readable storage medium may include, but are not limited to: an electrical connection with one or more wires, a portable computer disk, a hard disk, random access memory (RAM), read-only memory (ROM), erasable programmable read only memory (EPROM or flash memory), optical fiber, compact disc read only memory (CD-ROM), optical storage device, magnetic storage device, or any suitable combination of the above. In the present disclosure, a computer-readable storage medium may be any tangible medium containing or storing a program, which may be used by or in combination with an instruction execution system, apparatus, or device. In this disclosure, computer-readable signal medium may include data signals propagated in the baseband or as part of the carrier wave, which carry computer-readable program code. This type of transmitted data signal can take various forms, including but not limited to electromagnetic signals, optical signals, or any suitable combination of the above. The computer-readable signal medium may also be any computer-readable medium other than a computer-readable storage medium, which may transmit, propagate or transmit programs for use by or in combination with an instruction execution system, apparatus or device. The program code contained on computer-readable media can be transmitted using any appropriate medium, including but not limited to: wires, optical cables, radio frequency (RF), etc., or any suitable combination of the above.

Another embodiment of the present disclosure also provides a computer-readable storage medium. The computer-readable storage medium stores computer execution instructions. When the processor executes the computer execution instructions, the method described in any of the above embodiments is implemented.

Another embodiment of the present disclosure also provides a computer-readable storage medium, which includes computer execution instructions. When the processor executes the computer execution instructions, the method described in any of the above embodiments is implemented.

The computer-readable medium may be included in the electronic device, may also exist alone without being assembled into the electronic device.

The computer-readable medium carries one or more programs. When the one or more programs are executed by the electronic device, the electronic device executes the method shown in the embodiments.

Computer program code for executing the operations disclosed herein can be written in one or more programming languages or combinations thereof, including object-oriented programming languages such as Java, Smalltalk, C++, and conventional procedural programming languages such as C or similar programming languages. Program code can be completely executed on a user computer, partially executed on the user computer, executed as an independent software package, partially executed on the user computer, partially executed on a remote computer, or completely executed on a remote computer or server. In cases involving remote computers, the remote computer can be connected to the user computer through any type of network, including a local area network (LAN) or wide area network (WAN), or can be connected to an external computer (such as using an internet service provider to connect via the internet).

The flow chart and block diagram in the accompanying drawings illustrate the architectures, functions, and operations of possible implementations of systems, methods, and computer program products according to various embodiments of the present disclosure. In this regard, each block in the flow chart or block diagram may represent a module, a program segment, or a part of code that contains one or more executable instructions for implementing specified logical functions. It should also be noted that, in some alternative implementations, the functions indicated in the blocks may occur in a different order than that indicated in the accompanying drawings. For example, two blocks shown in succession may actually be executed substantially in parallel, and sometimes they may also be executed in reverse order, which depends on the functions involved. It should also be noted that each of the blocks in the block diagram and/or flow chart, as well as the combination of blocks in the block diagram and/or flow chart, may be implemented with a specialized hardware-based system that performs specified functions or operations, or may be implemented with a combination of specialized hardware and computer instructions.

The unit described in the embodiments of the present disclosure can be realized by software or hardware. In some cases, the name of the unit does not constitute a limitation of the unit itself. For example, the first obtaining unit may also be described as "a unit that obtains at least two Internet protocol addresses".

The functions described above herein may be executed, at least in part, by one or more hardware logic components. For example, and without limitation, exemplary types of hardware logic components that may be used comprise Field-Programmable Gate Array (FPGA), Application Specific Integrated Circuit (ASIC), Application Specific Standard Product (ASSP), System On Chip (SOC), Complex Programmable Logic Device (CPLD), and so on.

In the context of the present disclosure, a machine readable medium may be a tangible medium that may contain or store a program for use by or in combination with the instruction execution system, apparatus, or device. The machine readable medium may be a machine readable signal medium or a machine readable storage medium. The machine readable medium may comprise, but are not limited to, electronic, magnetic, optical, electromagnetic, infrared, or semiconductor system, apparatus, or device, or any suitable combination of the above. More specific examples of the machine readable storage medium may comprise electrical connection based on one or more wires, portable computer disk, hard drive, random access memory (RAM), read-only memory (ROM), erasable programmable read-only memory (EPROM or flash memory), optical fiber, portable compact disk read-only memory (CD-ROM), optical storage device, magnetic storage device, or any suitable combination of the above.

In the first aspect, according to one or more embodiments of the present disclosure, a method of playing a media content is provided, including:
playing a first media content in a first playing page, and displaying a first associated information corresponding to a second media content associated with the first media content, wherein the first media content and the second media content are media contents of different types; and
in response to a triggering operation of a user on the first associated information, playing the second media content associated with the first media content in a second playing page.

According to one or more embodiments of the present disclosure, after playing the second media content associated with the first media content in the second playing page, the method further comprises:
displaying a second associated information corresponding to the first media content in the second playing page; and
in response to a triggering operation of the user on the second associated information, returning to the first playing page, and playing the first media content.

According to one or more embodiments of the disclosure, the playing a first media content in a first playing page, and displaying a first associated information corresponding to a second media content associated with the first media content comprises:
displaying and playing the second media content in a media content stream in the second playing page;
in response to a switching operation of the user on the second media content, switching to a next media content in the media content stream; and
if the next media content is the first media content that is of different type from the second media content, skipping to the first playing page to play the first media content, and displaying the first associated information corresponding to the second media content associated with the first media content.

According to one or more embodiments of the present disclosure, the media content stream comprises a first content stream and a second content stream, the first content stream comprises a plurality of first media contents, and the second content stream comprises a plurality of second media contents;
after if the next media content is the first media content that is of different type from the second media content, skipping to the first playing page to play the first media content, and displaying the first associated information corresponding to the second media content associated with the first media content, the method further comprises:
playing the plurality of first media contents in the first content stream in sequence.

According to one or more embodiments of the disclosure, the first associated information further comprises an interaction icon corresponding to the second media content;
after the displaying a first associated information corresponding to a second media content associated with the first media content, the method further comprises:
in response to the triggering operation of the user on the interaction icon, updating interaction information corresponding to the second media content;
wherein the interaction icon comprises at least one of a favoriting icon, a commenting icon, a like icon and a sharing icon.

According to one or more embodiments of the present disclosure, the interaction icon comprises a favoriting icon;
after the displaying a first associated information corresponding to a second media content associated with the first media content, the method further comprises:
in response to the triggering operation of the user on the favoriting icon, adding the second media content to a favoriting list.

According to one or more embodiments of the present disclosure, the first playing page or the second playing page further comprises a predetermined favoriting list icon;
the method further comprises:
in response to a triggering operation of the user on the favoriting list icon, displaying the favoriting list; and
based on a selection operation of the user on a media content saved in the favoriting list, playing the media content selected by the user.

According to one or more embodiments of the present disclosure, the in response to a triggering operation of a user on the first associated information, playing the second media content associated with the first media content in a second playing page comprises:
in response to the triggering operation of the user on the first associated information, displaying a version list corresponding to the second media content in the first playing page;
based on a selection operation of the user in the version list, determining a target version selected by the user; and
playing the second media content of the target version in the second playing page.

According to one or more embodiments of the present disclosure, the playing the second media content associated with the first media content in a second playing page comprises:
playing the second media content from an initial position of the second media content associated with the first media content.

According to one or more embodiments of the present disclosure, the playing the second media content associated with the first media content in a second playing page comprises:
determining a playing progress of the first media content; and
determining a target timestamp at which the second media content matches with the playing progress, and playing the second media content from the target timestamp.

According to one or more embodiments of the present disclosure, the playing the second media content associated with the first media content in a second playing page comprises:
determining a target segment of the second media content that meets a predetermined playing condition; and
playing the target segment corresponding to the second media content.

In a second aspect, according to one or more embodiments of the present disclosure, an apparatus of playing a media content is provided, including:
a displaying module configured to play a first media content in a first playing page, and display a first associated information corresponding to a second media content associated with the first media content, wherein the first media content and the second media content are media contents of different types; and
a playing module configured to, in response to a triggering operation of a user on the first associated information, play the second media content associated with the first media content in a second playing page.

According to one or more embodiments of the present disclosure, the apparatus further comprises:
the displaying module is further configured to display a second associated information corresponding to the first media content in the second playing page;
the playing module is further configured to, in response to a triggering operation of the user on the second associated information, return to the first playing page, and play the first media content.

According to one or more embodiments of the present disclosure, the displaying module is configured to:
display and play the second media content in a media content stream in the second playing page;
in response to a switching operation of the user on the second media content, switch to a next media content in the media content stream; and
if the next media content is the first media content that is of different type from the second media content, skip to play the first media content in the first playing page, and display the first associated information corresponding to the second media content associated with the first media content.

According to one or more embodiments of the present disclosure, the media content stream comprises a first content stream and a second content stream, the first content stream comprises a plurality of first media contents, and the second content stream comprises a plurality of second media contents;
the displaying module is further configured to:
play the plurality of first media contents in the first content stream in sequence.

According to one or more embodiments of the disclosure, the first associated information further comprises an interaction icon corresponding to the second media content;
the apparatus further comprises:
an updating module configured to, in response to the triggering operation of the user on the interaction icon, update interaction information corresponding to the second media content;
wherein the interaction icon comprises at least one of a favoriting icon, a commenting icon, a like icon and a sharing icon.

According to one or more embodiments of the present disclosure, the interaction icon comprises a favoriting icon;
the apparatus further comprises:
an adding module configured to, in response to the triggering operation of the user on the favoriting icon, add the second media content to a favoriting list.

According to one or more embodiments of the present disclosure, the first playing page or the second playing page further comprises a predetermined favoriting list icon;
the apparatus further comprises:
the displaying module is further configured to, in response to a triggering operation of the user on the favoriting list icon, display the favoriting list;
the playing module is further configured to, based on a selection operation of the user on a media content saved in the favoriting list, play the media content selected by the user.

According to one or more embodiments of the present disclosure, the playing module is configured to:
in response to the triggering operation of the user on the first associated information, display a version list corresponding to the second media content in the first playing page;
based on a selection operation of the user in the version list, determine a target version selected by the user; and
play the second media content of the target version in the second playing page

According to one or more embodiments of the present disclosure, the playing module is configured to:
play the second media content from an initial position of the second media content associated with the first media content.

According to one or more embodiments of the present disclosure, the playing module is configured to:
determine a playing progress of the first media content; and
determine a target timestamp at which the second media content matches with the playing progress, and playing the second media content from the target timestamp.

According to one or more embodiments of the present disclosure, the playing module is configured to:
determine a target segment of the second media content that meets a predetermined playing condition; and
play the target segment corresponding to the second media content.

In a third aspect, according to one or more embodiments of the present disclosure, an electronic device is provided, comprising: at least one processor and a memory;
the memory stores computer execution instructions;
the at least one processor executes the computer execution instructions stored by the memory, so that the at least one processor executes the method of playing the media content described in the first aspect and various possible designs of the first aspect.

In a fourth aspect, according to one or more embodiments of the present disclosure, a computer-readable storage medium is provided, the computer-readable storage medium having computer execution instructions stored thereon, the computer execution instructions, when executed by the processor, carry out the method of playing the media content described in the first aspect and various possible designs of the first aspect.

In a fifth aspect, according to one or more embodiments of the present disclosure, a computer program product is provided, comprising computer execution instructions, which, when executed by a processor, carry out the method of playing the media content described in the first aspect and various possible designs of the first aspect.

In a sixth aspect, according to one or more embodiments of the present disclosure, a computer program is provided, which, when executed by a processor, carries out the method of playing the media content described in the first aspect and various possible designs of the first aspect.

The above description is only the preferred embodiment of the present disclosure and an explanation of the technical principles used. Those skilled in the art should understand that the scope of the disclosure involved in the present disclosure is not limited to the specific combination of the above technical features, but should also cover other technical solutions formed by any combination of the above technical features or their equivalent features without departing from the above disclosure concept. For example, the technical solution formed by replacing the above features with (but not limited to) technical features with similar functions in the present disclosure.

In addition, although the operations are depicted in a specific order, this should not be understood as requiring these operations to be performed in the specific order shown or in a sequential order. Under certain circumstances, multitasking and parallel processing may be advantageous. Similarly, although several specific implementation details are included in the above discussion, these should not be construed as limiting the scope of the present disclosure. Certain features described in the context of individual embodiments may also be implemented in combination in a single embodiment. Conversely, various features described in the context of a single embodiment may also be implemented in multiple embodiments individually or in any suitable subcombination.

While the subject matter has been described in language specific to structural features and/or methodological logical acts, it should be understood that the subject matter defined in the appended claims is not necessarily limited to the particular features or acts described above. Rather, the particular features and acts described above are merely exemplary forms of implementation of the claims.

## Claims

1. A method of playing a media content, comprising:
playing a first media content in a first playing page, and displaying a first associated information corresponding to a second media content associated with the first media content, wherein the first media content and the second media content are media contents of different types; and
in response to a triggering operation of a user on the first associated information, playing the second media content associated with the first media content in a second playing page.

2. The method of claim 1, wherein after playing the second media content associated with the first media content in the second playing page, the method further comprises:
displaying a second associated information corresponding to the first media content in the second playing page; and
in response to a triggering operation of the user on the second associated information, returning to the first playing page, and playing the first media content.

3. The method of claim 1 or 2, wherein the playing a first media content in a first playing page, and displaying a first associated information corresponding to a second media content associated with the first media content comprises:
displaying and playing the second media content in a media content stream in the second playing page;
in response to a switching operation of the user on the second media content, switching to a next media content in the media content stream; and
if the next media content is the first media content that is of different type from the second media content, skipping to the first playing page to play the first media content, and displaying the first associated information corresponding to the second media content associated with the first media content.

4. The method of claim 3, wherein the media content stream comprises a first content stream and a second content stream, the first content stream comprises a plurality of first media contents, and the second content stream comprises a plurality of second media contents;
after if the next media content is the first media content that is of different type from the second media content, skipping to the first playing page to play the first media content, and displaying the first associated information corresponding to the second media content associated with the first media content, the method further comprises:
playing the plurality of first media contents in the first content stream in sequence.

5. The method of any one of claims 1-4, wherein the first associated information further comprises an interaction icon corresponding to the second media content;
after the displaying a first associated information corresponding to a second media content associated with the first media content, the method further comprises:
in response to the triggering operation of the user on the interaction icon, updating interaction information corresponding to the second media content;
wherein the interaction icon comprises at least one of a favoriting icon, a commenting icon, a like icon and a sharing icon.

6. The method of claim 5, wherein the interaction icon comprises a favoriting icon;
after the displaying a first associated information corresponding to a second media content associated with the first media content, the method further comprises:
in response to the triggering operation of the user on the favoriting icon, adding the second media content to a favoriting list.

7. The method of claim 6, wherein the first playing page or the second playing page further comprises a predetermined favoriting list icon;
the method further comprises:
in response to a triggering operation of the user on the favoriting list icon, displaying the favoriting list; and
based on a selection operation of the user on a media content saved in the favoriting list, playing the media content selected by the user.

8. The method of any one of claims 1-7, wherein the in response to a triggering operation of a user on the first associated information, playing the second media content associated with the first media content in a second playing page comprises:
in response to the triggering operation of the user on the first associated information, displaying a version list corresponding to the second media content in the first playing page;
based on a selection operation of the user in the version list, determining a target version selected by the user; and
playing the second media content of the target version in the second playing page.

9. The method of any one of claims 1-7, wherein the playing the second media content associated with the first media content in a second playing page comprises:
playing the second media content from an initial position of the second media content associated with the first media content.

10. The method of any one of claims 1-7, wherein the playing the second media content associated with the first media content in a second playing page comprises:
determining a playing progress of the first media content; and
determining a target timestamp at which the second media content matches with the playing progress, and playing the second media content from the target timestamp.

11. The method of any one of claims 1-7, wherein the playing the second media content associated with the first media content in a second playing page comprises:
determining a target segment of the second media content that meets a predetermined playing condition; and
playing the target segment corresponding to the second media content.

12. An apparatus of playing a media content, comprising:
a displaying module configured to play a first media content in a first playing page, and display a first associated information corresponding to a second media content associated with the first media content, wherein the first media content and the second media content are media contents of different types; and
a playing module configured to, in response to a triggering operation of a user on the first associated information, play the second media content associated with the first media content in a second playing page.

13. An electronic device, comprising: at least one processor and a memory;
the memory stores computer execution instructions;
the at least one processor executes the computer execution instructions stored by the memory, so that the at least one processor executes the method of playing the media content of any one of claims 1-11.

14. A computer-readable storage medium having computer execution instructions stored thereon, the computer execution instructions, when executed by the processor, carry out the method of playing the media content of any one of claims 1-11.

15. A computer program product, comprising computer execution instructions, which, when executed by a processor, carry out the method of playing the media content of any one of claims 1-11.

16. A computer program, when executed by a processor, carrying out the method of playing the media content of any one of claims 1-11.
